# EUROPEAN PATENT SPECIFICATION

(11) **EP 2 798 336 B1**
(45) Date of publication and mention of the grant of the patent: **01.01.2020**
(21) Application number: 12818903.2
(22) Date of filing: 06.12.2012
(51) Int. Cl.: G01N 21/95, B62D 57/024, G01N 27/82, G01N 29/265, G01N 22/02, G01N 23/18, B63B 59/10, G01N 29/22, G01N 29/04, G01N 29/27

(54) **INSPECTION DEVICE WITH TRACTION AND STABILISING MECHANISMS**
INSPEKTIONSVORRICHTUNG MIT ZUG- UND STABILISIERUNGSMECHANISMEN
DISPOSITIF D'INSPECTION AVEC DES MÉCANISMES DE TRACTION ET DE STABILISATION

(30) Priority: 07.12.2011 GB 201121001
(43) Date of publication of application: 05.11.2014
(73) Proprietor: Fugro Subsea Services Limited, Aberdeen, Aberdeenshire AB23 8JW (GB)
(72) Inventor: HARVEY, William Ian, North Walsham Norfolk NR28 9HT (GB)
(74) Representative: Nederlandsch Octrooibureau
(86) International application number: PCT/GB2012/053036
(87) International publication number: WO 2013/083986

(56) References cited:
- EP-A1- 0 346 473
- EP-A2- 0 109 201
- GB-A- 2 105 048
- US-A- 5 947 051
- US-A1- 2006 055 396

## Description

The present invention relates to an inspection device and to a method of inspecting an item. Typically, the inspection device is adapted to inspect metal items, and the method is a method of inspecting a metal item, especially a weld on an item that comprises a ferrous metal, although the device can be used to inspect other features of structural components, such as joints, walls, outer surfaces, etc., and is not limited to the inspection of welds, or to the inspection of items that are comprised wholly of metal. Metal structural components are typically welded together. Good practice requires that the integrity of most high value components are inspected at regular intervals to ensure that they are maintained or replaced before failure is imminent. The inspection of welds in metallic structures is a particular issue in the oil industry, because the failure of metallic components of structures such as oil exploration and production equipment and installations has significant safety and environmental implications. Typically, welds in metal items such as oil rig legs are inspected visually, although they can also be X-rayed, inspected by ultrasound probes, or assessed by other methods. However, accessing the welds to perform the inspection (by whatever means) is not always easy, and welds that are located in inaccessible positions present frequent challenges to their safe and efficient inspection by conventional methods.

EP0346473 discloses a known design of inspection device which is useful for understanding the present invention. US5947051 discloses a submarine inspection device which has wheels and magnetically attaches itself to the surface to be inspected.

According to the invention, there is provided an inspection device as claimed in claim 1. The invention also provides a method of inspecting an item as claimed in claim 15. Typically the inspection tool is provided on an inspection head on the body. Optionally the inspection tool is moveable relative to the body, typically on the inspection head. Typically, the stabilising mechanism maintains a desired orientation of the inspection head relative to the item being inspected while the traction mechanism moves the body along the item being inspected. Typically the stabilising mechanism adjusts the orientation of the body relative to the item so that the orientation of the head relative to the item being inspected remains within desired parameters, typically accommodating for uneven surfaces of the item. Optionally the adjustment of the relative positions of the body and the item is automatic.

Typically the stabilising mechanism comprises at least two stabilising members, one on each side of the axis of the body, and spaced apart laterally from the body, and typically adapted to apply a force to stabilise the body against the item at two locations on the item being inspected, typically locations that are spaced apart laterally on either side of the body, typically at equal spacings.

Typically the stabilising mechanism causes the body to engage the item being inspected at spaced apart locations on either side of the body, and orients the inspection tool at the mid-line between the spaced apart points of engagement between the inspection device and the item being inspected.

The traction mechanism comprises at least one roller device, typically more than one, e.g. two rollers, optionally spaced apart from one another along the axis of the body. Typically, the inspection tool (e.g. on the head) can be provided on the body at a location spaced apart from the two rollers, and typically located equi-distantly between the two rollers.

In certain embodiments, the traction mechanism can comprise mechanisms other than rollers, for example caterpillar tracks, sliders, etc.

Typically, the rollers have arcuate, e.g. circular rolling faces. In certain embodiments, the rollers can be wheels. In particular embodiments of the invention, the rollers can be at least partially spherical. In some embodiments, the rollers can typically rotate on at least one axis, optionally passing horizontally through the body. Optionally the rollers can be circular in cross-section, and can optionally be at least partially arcuate in transverse section through the rollers. The rollers can optionally contact the surface of the item being inspected by rolling along a rolling face of the roller which is arcuate in at least two planes.

Optionally, the rollers can be constrained on one or more axis so that the roller is constrained to move rotationally around the axis. Alternatively, the roller can rotate around more than one axis, and can optionally comprise a spherical or partially spherical ball constrained to rotate, typically within a socket, but not necessarily be constrained to rotate on a single axis, thereby allowing rotation of the ball relative to the body in more than one plane, e.g. free rotation within the socket.

Optionally, the traction mechanism can be passive, and simple embodiments do not need the rollers or wheels etc to be driven. However, in typical embodiments the traction mechanism can be powered, so that at least one roller, wheel, etc. can be driven in rotation in order to supply motive force to move the body. The power driving the traction mechanism can be supplied from an on-board battery on the body in some embodiments, or alternatively, and advantageously in other embodiments, can be supplied from an external power pack, such as a hydraulic power pack, optionally provided separately from the body, for example on a support vehicle.

Typically the inspection device is adapted to be used for the inspection of underwater items.

Optionally the body comprises a buoyant material. Typically parts of the body are formed from buoyant foam material. Typically the body has near neutral buoyancy.

The stabilising mechanism can comprise at least one magnetic device adapted to attract ferrous metals. Optionally at least two magnetic devices are provided, typically on opposite sides of the body. Typically components of the stabilising mechanism can be incorporated within components of the traction mechanism. Optionally, at least one magnet is provided on each roller. Optionally, the or each magnet is rotationally mounted on the body, typically allowing free movement (e.g. rotation) of the magnet relative to the body. The rotation of the or each magnet on the axis as the inspection device moves (through rotation of the rollers) relative to the item being inspected maintains a magnetic attractive force between the magnets of the stabilising mechanism and the item being inspected. Typically, the item being inspected is a metal item, or comprises a metal that is attracted to the magnet, and optionally the item is a weld between two items comprising a ferrous metal component.

The magnets are constrained to rotate around the same axis (or axes) as the rollers. Typically, the magnets are constrained inside the rollers, and rotation of the magnets around the axis (or axes) typically allows the magnet to move around at least one axis around an inner surface of the roller, typically maintaining a fixed distance between the magnet and the inner surface of the roller. Thus, as the outer surface of the roller engages the item to be inspected, the magnet mounted inside the roller is typically held at a fixed distance with respect to the item being inspected as the roller rotates and the body translates along the item being inspected. This is a useful feature, because maintaining the distance between the magnet and the item being inspected means that movement of the body along the item being inspected does not alter the magnetic attractive force because the magnet remains within a relatively consistent range in relation to the item being inspected.

Typically, the magnets can be arranged on an arc, which can typically match the radius of curvature of the roller, so that magnets arranged on different portions of the arc are equidistant from a surface of the roller, typically equidistant from the outer surface of the roller. Optionally the magnets are arranged in a geodesic arrangement on an arcuate arm. Optionally the whole arm is adapted to move, e.g. rotate around an axis.

Optionally the magnets can cover 10-30° of the arc, which can cover the same proportion of the circumference (e.g. the inner surface) of the roller. Typically the magnets can cover 30-60° of the arc and the related circumference of the roller, and in some embodiments, the circumferential coverage of the magnets is 90 to 180° of the surface of the roller. Optionally, the magnets can cover more than 180° of the inner surface of the roller. More than one magnet can be provided on the arm, or a single elongate magnet can be provided typically in a geodesic arrangement on the arm.

Optionally, the inspection head can move relative to the body, typically by extending away from the body, and/or retracting towards it. Optionally, the inspection head can be biased to extend away from the body, and optionally the biasing force can be provided by a resilient device such as a coil spring or other resilient member which can typically be held in compression thereby urging the inspection head into contact with the item being inspected.

Optionally the inspection head can comprise a magnetic device in order to attract the head to a ferrous metal item being inspected.

Optionally, the stabilising mechanism can attract the body of the inspection device toward the item being inspected. This can help to maintain the body (and the inspection tool) in a consistent and favourable orientation for inspecting the item. The attractive force between the magnet and the item typically helps to hold the body of the inspection device against the item being inspected, e.g. due to magnetic attraction between e.g. the magnets and the ferrous metal of the item being inspected, and the magnetic attractive force can typically maintain the compression of the resilient member, thereby urging the inspection head against the outer surface of the item being inspected, in order to maintain a consistent spatial relationship (e.g. touching) between the inspection head and the item being inspected as the body moves in relation to the item being inspected. Optionally the inspection head can comprise a magnetic device adapted to maintain the head in contact with the item being inspected.

The item being inspected can optionally comprise a tubular member with a non-planar surface, and can optionally comprise a weld or other junction between two tubular members. Optionally, the inspection device can move around non-planar welds formed between two tubular members, and the inspection head can be kept in contact with the weld. This is typically achieved by the geometry of the rollers and by the extension and retraction of the inspection head in relation to the body.

While it is desirable to maintain a consistent spatial relationship between the inspection head and the item being inspected, this is not essential, and a fixed inspection head comprising a camera with e.g. an auto-focus function can be used in certain embodiments without necessarily having the capability of moving the inspection head relative to the body to move the head towards and away from the surface of the item being inspected.

The various aspects of the present invention can be practiced alone or in combination with one or more of the other aspects, as will be appreciated by those skilled in the relevant arts. The various aspects of the invention can optionally be provided in combination with one or more of the optional features of the other aspects of the invention. Also, optional features described in relation to one embodiment can typically be combined alone or together with other features in different embodiments of the invention.

Various embodiments and aspects of the invention will now be described in detail with reference to the accompanying figures. Still other aspects, features, and advantages of the present invention are readily apparent from the entire description thereof, including the figures, which illustrates a number of exemplary embodiments and aspects and implementations. The invention is also capable of other and different embodiments and aspects, and its several details can be modified in various respects, all without departing from the spirit and scope of the present invention. Accordingly, the drawings and descriptions are to be regarded as illustrative in nature, and not as restrictive. Furthermore, the terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes.

Any discussion of documents, acts, materials, devices, articles and the like is included in the specification solely for the purpose of providing a context for the present invention. It is not suggested or represented that any or all of these matters formed part of the prior art base or were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of", "consisting", "selected from the group of consisting of', "including", or "is" preceding the recitation of the composition, element or group of elements and vice versa.

All numerical values in this disclosure are understood as being modified by "about". All singular forms of elements, or any other components described herein are understood to include plural forms thereof and vice versa.

In the accompanying drawings,
Fig 1 is a side view of an inspection device according to an embodiment of the invention;

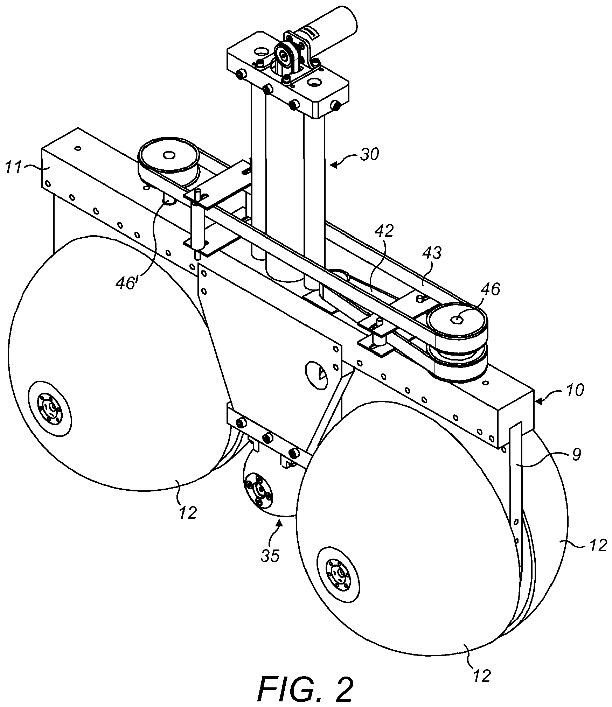

Fig 2 is a perspective view from above on one side of the Fig 1 inspection device;

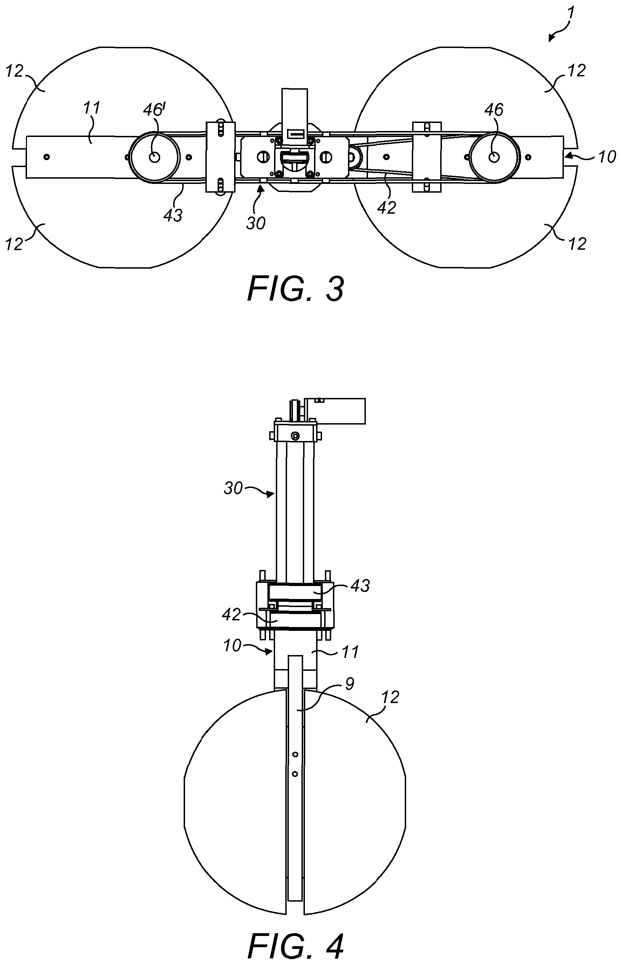

Fig 3 is a plan view of the Fig 1 inspection device;
Fig 4 is an end view of the Fig 1 inspection device;

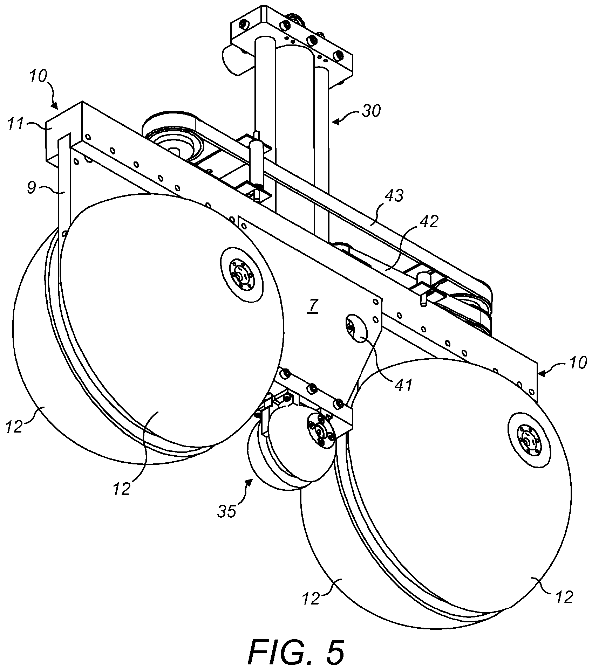

Fig 5 is a perspective view from beneath and from the other side of the Fig 1 inspection device;
Fig 6 is an exploded perspective view from one side of the Fig 1 inspection device;

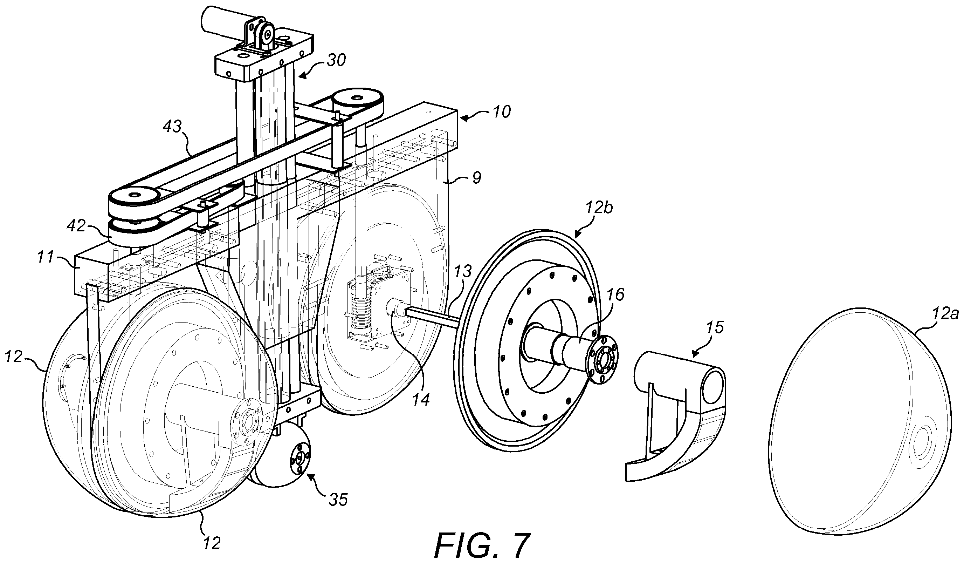

Fig 7 is an exploded perspective view similar to Fig 6 showing internal details of the rollers;
Fig 8 is a perspective side view of a gear box visible in the Fig 7 view;
Fig 9 is a perspective view of an inspection head chassis of the Fig 1 device; and
Figs 10-15 show sequential views of the Fig 1 device inspecting a weld at a junction between tubular beams on a leg of an oil well platform.

Referring now to the drawings, an inspection device 1 has a body 10, a traction mechanism in the form of a number of hemispherical rollers 12, arranged in pairs, each pair 12 being typically rotatable on a transverse axis passing through the body 10, so that typically each roller 12 is rotatable independently. The body 10 is typically formed from an upper bar 11 set above the rollers 12, and a pair of plates 9 extending from the lower surface of the bar 11, and typically spaced at opposite axial ends of the bar 11, thereby forming a recess 8 between the plates 9. Typically, the axis of rotation of the rollers 12 pass through the plates 9, and optionally each roller 12 is mounted on a respective axle, although optionally the rollers can be mounted in different ways, e.g. one pair of rollers sharing a single axle and rotating together.

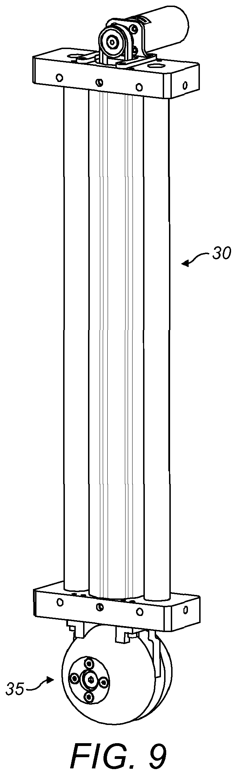

In the recess 8 between the axially-spaced plates 9 depending from the bar 11, an inspection head 35 is mounted on an inspection head chassis 30. Typically, the head 35 is mounted on the lower end of the chassis 30 (best seen in Fig 9). The chassis 30 has a long axis that is disposed generally parallel and in alignment with the front and rear plates 9, so that the head 35 is typically mounted on the chassis 30 in between the rollers 12 and plates 9, and in line with the plates 9. Typically, the inspection head 35 is spaced equi-distantly between the plates 9, and is in the centre of the recess 8, although this is not necessary for all embodiments of the invention.

Typically, the chassis 30 can move up and down along its axis X-X relative to the body 10. Typically, the chassis 30 is housed within side plates 7, which cover the recess 8. The chassis 30 typically slides axially through an alignment slot (not shown) in the body 10 to extend and retract the inspection head 35 away from and towards the bar 11 along the long axis X-X of the chassis 30.

Typically, the chassis 30 is biased by a resilient device such as a spring held in compression between the inspection head 35 and the body 10, typically between the bar 11 and a shoulder on the chassis 30. The effect of the resilient device is typically to extend the inspection head 35 downwardly from the bar 11 between the roller devices 12.

Typically, the roller devices 12 are driven by a drive mechanism 40. Typically, the drive mechanism comprises a hydraulic motor, typically disposed between the side plates 7, and optionally comprising an impeller device in fluid communication with a hydraulic fluid conduit supplied by an inlet 41 in one of the side plates. The impeller is typically connected to an axle terminating in a sprocket 45. A first drive belt 42 transmits the rotation of the sprocket 45 to a drive shaft 46 operatively connected to one of the rollers 12, and a second drive belt 43 connects the first drive shaft to a second drive shaft 46' operatively connected to the other roller 12.

Therefore, rotation of the impeller on the hydraulic motor activates the belts 42 and 43 to drive the rollers in rotation, typically synchronously, typically in the same direction, in order to supply motive force to the device 1 to move the inspection head 35 along an item being inspected. Typically, the hydraulic fluid is supplied from a hydraulic power pack, typically on a support vehicle. The rollers 12 typically contact the surface of the item being inspected at spaced apart locations on the device 1, typically four spaced apart locations, so that the device can is stably perched the four rollers 12 where they meet the surface of the item being inspected.

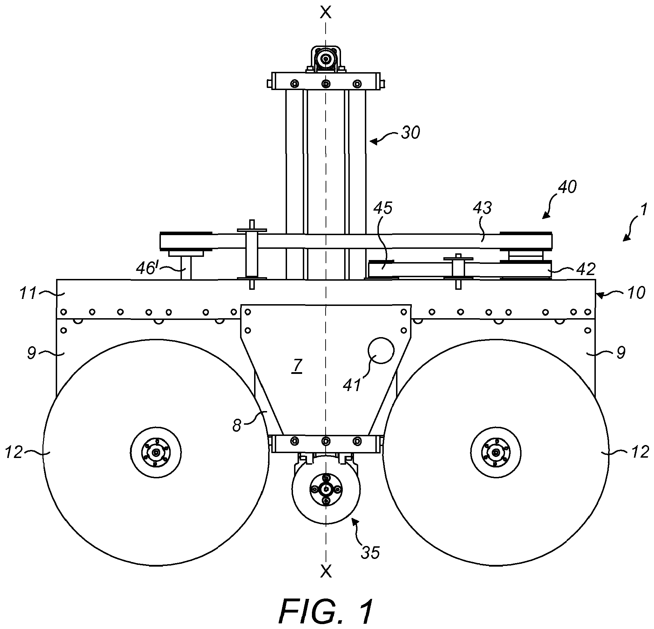

In certain embodiments of the invention, such as that disclosed in Fig 1, the inspection device 1 is used subsea to inspect welds in junctions between metal components of oil rigs such as support legs of the rig or platform, and the hydraulic power driving the impeller and providing the motive force to drive the inspection device 1 relative to the metal components of the leg being inspected can be supplied by a remotely operated vehicle (ROV). Optionally, the belts 42, 43 can be constrained from deviating beyond the boundaries of the body 10 by guide rollers.

In the subsea embodiment shown in Fig1, typically the body 10 can be made from buoyant material such as foam, which typically makes up the main components of the bar 11 and the plates 9. Typically the overall buoyancy of the body 10 is neutral or only slightly negatively buoyant.

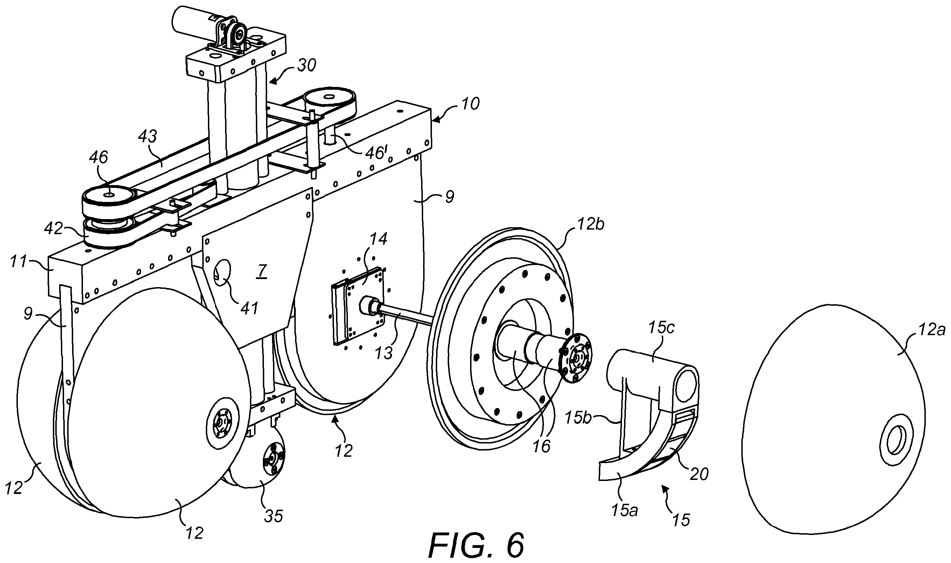

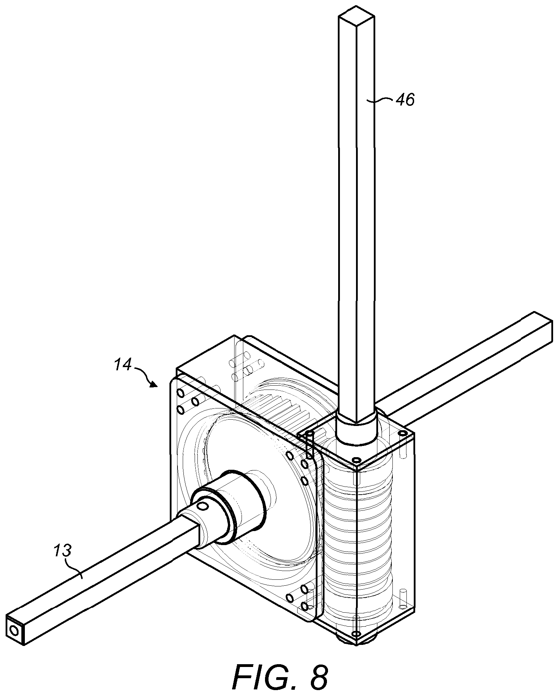

Referring now to Fig 6, the structure of the rollers 12 will be described. Typically, each roller 12 comprises a hemispherical roller casing 12a which is generally in the form of a hemispherical shell having a central aperture for mounting the casing 12a on an axle. The hemispherical roller casing 12a is typically hollow, and the hollow space inside each roller 12 is typically closed by a circular flat back plate 12b. The axle on which the rollers 12 are mounted typically comprises a non-circular drive shaft 13 extending from the gear box 14 driven by a worm drive (as best seen in Fig 8 connected to the vertical drive shaft 46 driven by the belts 42, 43). Typically, each roller 12 is powered in the same way and each is mounted on a separate respective drive shaft 13, although in certain embodiments, the pair of rollers at each of the front and rear of the chassis 10 can be mounted on a common drive shaft 13, extending through the plate 9. In this example, each roller 12 is mounted on one end of a respective separate drive shaft 13, extending sideways in opposite directions perpendicularly to the plate 9. Each drive shaft 13 is non-circular and has at least one flat to engage with a flat on the roller 12, typically on the back plate 12b, so that rotation of the drive shaft 13 rotates the roller 12. The rollers 12 can optionally have gripping formations on their outer surfaces, behaving as tyres to improve traction between the rollers 12 and the item being inspected.

Between the back plate 12b and the casing 12a each roller has a hemispherical space in which the stabilising mechanism is provided. In this embodiment, the stabilising mechanism comprises a magnetic arm assembly 15 in each hemispherical roller 12. Each magnetic arm assembly 15 comprises an arm 15a formed in a geodesic arrangement forming an arc, which extends from a central tubular casing 15c, and between the arm 15a and the casing 15c a reinforcing brace 15b is provided to increase the rigidity of the magnetic arm assembly 15. The tubular casing 15c is mounted on bearings 16, and the magnetic arm assembly 15 is free to rotate on the bearings 16 and is not rotationally connected to the drive shaft 13, or to the roller 12. Further, the bearings 16 isolate the arm assembly 15 from any rotational forces, allowing free rotation of the magnetic arm assembly 15 around the axis of the drive shaft 13, even as the roller 12 rotates.

The magnetic arm assembly 15 is typically asymmetric. The arm 15a typically extends in a geodesic manner forming an arc around the inner circumference of the roller casing 12a. The arm 15a therefore extends radially from the central tubular casing 15c, the axis of which is typically co-axial with the drive shaft 13 and the bearings 16, so that the axis of rotation of the arm assembly 15 is coaxial with the axis of rotation of the roller 12. Typically, the casing 15c fits over the bearings 16, and allows the arm 15a to spin freely around the axis of the drive shaft 13. Since the bearings 16 isolate all rotational forces from the magnetic arm assembly 15, the arcuate arm 15a of the assembly 15 generally rotates around the axis of the drive shaft 13 under the force of gravity (in the absence of any other forces).

Typically, the brace 15b between the central tubular casing 15c and the arm 15a clears all of the internal components of the roller 12 allowing free rotation of the arm assembly 15 around the axis of the bearing 16 and drive shaft 13.

When assembled, the arcuate arm 15a is typically disposed close to the inner face of the shell 12a, and the outer surface of the arm is typically provided with magnetic elements 20. The magnetic elements 20 are typically shaped to conform generally to the shape of the inner surface of the shell 12a, so that the magnets 20 are generally spaced at a defined and relatively constant distance from the inner surface of the hemispherical roller casing 12a, and as a result of the geodesic arc form of the arm 15a, this relative spacing between the magnets 20 and the inner surface of the roller casing 12a is typically consistent irrespective of the rotational position of the magnet assembly 15, so that each magnet 20 is typically always a defined distance away from the inner surface of the roller casing 12a. Typically, the spacing between the roller casing 12a and the magnet 20 is as small as possible whilst still allowing clearance between the magnet assembly 15 and the internal components of the roller 12. Additionally, the wall thickness of the roller casing 12a is typically relatively thin, so that the overall spacing between the external surface of the roller casing 12a and the outwardly facing surface of the magnet 20 on the magnetic arm assembly 15 is kept to a minimum. Typically all of the magnets have the same strength and spacing from the inner surface of the shell 12a, so that the magnetic force from the magnets 20 can be relatively constant over the whole spherical surface of the roller 12.

Typically, the drive head 35 can comprise a pair of hemispherical wheels similar to the roller shells 12a, and optionally, the drive head 35 can be driven in rotation, optionally synchronously with the driving of the rollers 12 by the drive belts 42, 43. Optionally, the chassis 30 can have a drive belt arrangement (best seen in Fig 9) and a hydraulic motor connected to the hydraulic power source. Optionally, this can be routed through the body 10 and supplied from the same source as the hydraulic power source that supplies energy to the hydraulic motor driving the belts 42, 43. This typically drives the optional hemispherical wheels on the inspection head 35 in rotational around the outer surface of the item being inspected, in concert with the rotation of the main drive rollers 12. Alternatively, the inspection head 35 can be provided with simple unpowered rollers and does not require a drive system, and the hemispherical rollers on the inspection head 35 can simply roll passively over the surface, powered by the motive force supplied to the main driven rollers 12. Typically the inspection head 35 can have magnetic arm assemblies in the rollers similar to those described in relation to the rollers 12.

The outer surface of the roller casings 12a is typically hemispherical. This ensures that a portion of the outer surface of the hemispherical roller casings 12a is maintained in contact with at least one surface of the item being inspected at all times. Typically, the radius of curvature of the hemispherical roller casings 12a is relatively large, so typically the hemispherical roller casings 12a on opposite sides of the body 10 engage the surface of the item to be inspected in at least two point locations. Typically, the two points are spaced apart on the item and on respective rollers on opposite sides of the body 10. This is especially useful when the inspection device 1 is crawling around a weld between two tubular items, which form the basis of many of the structural components of offshore installations. For example, an oil rig or platform can comprise various subsea structures typically formed as a frame and comprising tubular components that are welded together, making a variety of different angles between adjacent connected tubular components at different points of the weld. Often, the inspection of welds in such connections is extremely challenging, because the angle made between two connected metal tubular components can be acute in some locations, and obtuse in others, and it is often difficult to track an inspection device around the weld without manual intervention by divers etc.. The present embodiment of the invention is particularly useful in the inspection of welds between tubular items in inaccessible areas, because the inspection head 35 is typically centred on the interface between the two components as the hemispherical rollers 12 engage the two components. As the angle between the two components increases and decreases, as is extremely common in the case of, for example, a Y junction, the body of the device 10 typically varies in its relative distance from the weld, but this can be typically compensated for by the translation of the chassis 30 along the axis X-X to move the inspection head 35 towards and away from the body 10, and therefore maintain a consistent distance (or a relatively consistent distance within a smaller range) between the inspection head 35 and the Y junction being inspected. Also, the inspection head 35 is kept on track on the weld despite the angular and lateral deviations of the structure as will be explained below.

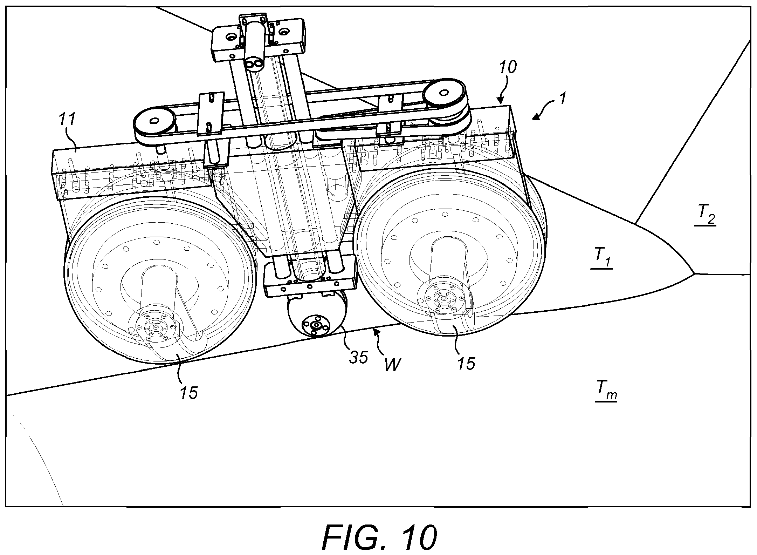

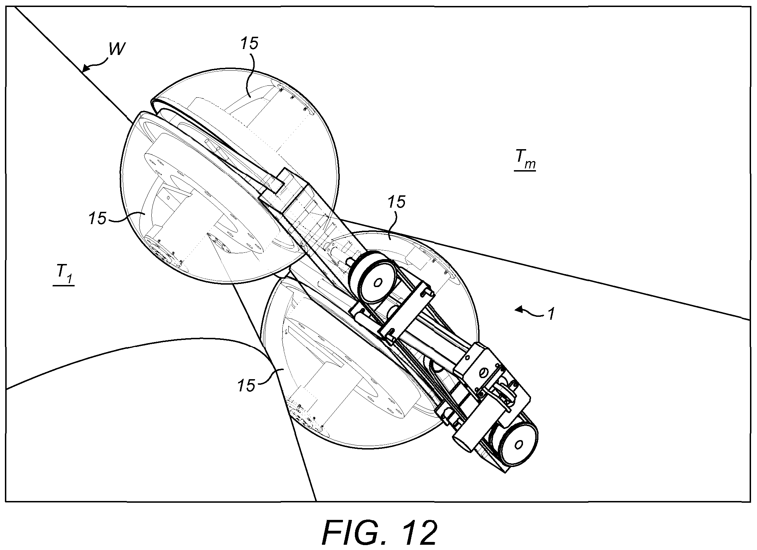

Referring now to Figs 10-15, these show the inspection device 10 crawling around a Y junction between two tubulars comprising a part of a subsea structure supporting a typical oil or gas production or drilling platform. The junction comprises a pair of smaller tubular components T1 and T2 connecting at different angles to a common point on a main tubular TM. The inspection head 35 is inspecting a weld W between the tubular T1 and the tubular TM which are typically arranged in a Y configuration. The tubular T2 is welded to both the tubular T1 and the tubular TM, forming a V shape junction between the tubular T1 and tubular T2. The angles between the various tubulars change as the weld extends around the circumference of the tubular T1. For example, as shown in Fig 10, at the commencement of the inspection run, the angle between the tubular T1 and tubular TM is close to 180° because the portion of the weld W being inspected by the inspection device 1 at the position shown in Fig 10 is practically on one side of the Y junction. The shells 12a of the rollers 12 are shown in Fig 10 in ghost outline, allowing the internal detail of the rollers 12 to be seen. In the Fig 10 position, the magnetic arm assemblies 15 have swung so that the magnets 20 on the outer surfaces of the arms on the port side of the inspection device 1 are as closes as they can be to the outer surface of main tubular TM. Because each of the magnetic assembly arms 15 is independently able to swing around the central axis of the drive shaft 13 on each side of the inspection device 1, the magnetic force exerted by the magnets 20 pulls the outer surface of the roller shell 12a hard against the outer surface of the main tubular TM with approximately the same quantum of force regardless of the rotational position of the arm with respect to the axis of the drive shaft 13. Although not visible in Fig 10, on the starboard side of the inspection device, the magnetic arm assemblies 15 are pointing in a generally similar (but not identical) configuration on the other side of the body 10 as they are magnetically attracted to the outer surface of the tubular T1. This can be seen best in Fig 12. Because each arm assembly 15 can swing independently of any other component in the structure, including the other arm assemblies 15, they are drawn by the magnetic forces applied by the magnets on the arms to the minimum distance between the body 10 and the tubular TM on the port side, and between the body 10 and the tubular T1 on the starboard side. As the rollers 12 are driven in rotation by the traction system, the arms 15 on each side of the body 10 are automatically kept in track with the tubular TM on the port side and the tubular T1 on the starboard side of the inspection device 1 by the magnetic attractive force between the ferrous metal of the tubulars and the magnets 20, because the resultant of the two force vectors applied by the two magnetic arm assemblies 15 typically keeps the body in a generally perpendicular orientation in relation to the weld W, and so keeps the inspection head tracked on the weld. Therefore, the inspection device 1 is drawn to the outer surface of the tubulars T1 and TM at engagement points that are spaced apart equally along the transverse axis of the inspection device, so each roller casing 12a is contacting the structure. This allows four points of contact between the inspection device 1 and the structure being inspected, which markedly increases the stability of the inspection device relative to the structure. Also, since the magnetic arm assemblies 15 can rotate independently of one another to remain in the same orientation relative to the outer surface of the tubulars TM and T1, they ensure that the magnets 20 remain at a relatively constant separation from the outer surface of the tubulars, so the magnetic force attracting the inspection device 1 onto the structure being inspected is relatively constant even though the angles between the tubulars are constantly changing around the weld. The constant force applied by the magnets means that the resultant of the vectors keeps the body 10 aligned with the weld W even if the track of the weld deviates between the non-planar tubulars.

Starting from the position shown in Fig 10, the chassis 30 is slightly extended in order to press the inspection head 35 against the surface of the weld. The four point engagement between the inspection device 1 and the tubulars T1 and TM, and the magnetic attractive force provided by the magnets on the swinging arm assemblies helps to ensure that the centre line of the body 10 is kept in alignment with the weld W as the rollers 12 rotate in order to move the inspection device 1 around the weld W. Thus, the inspection head 35 maintains its contact with the weld, and tracks it with substantially minimal deviation.

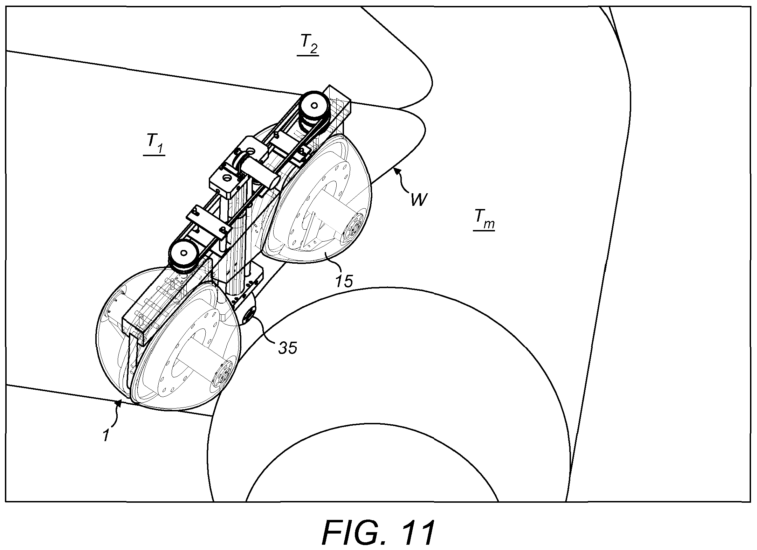

As the inspection device 1 has moved from the flat side section at the port side of the tubular TM to the Fig 11 position and is starting to move into the acute angle of the Y junction between the tubular T1 and the tubular TM, the more acute angle means that the body 10 is spaced further away from the weld W, and the chassis 30 needs to extend in order to keep the head 35 pressed against the weld W. It can be seen in Fig 11 that the swinging arm assembly 15 on the aft roller 12 has swung down close to the outer surface of the main tubular TM, but the magnetic arm assembly 15 of the forward roller pair 12 is not visible as it has rotated behind the bearings 16, in order to track the minimum distance between the arm assembly 15 and the main tubular TM on the port side, and the tubular T1 on the starboard side. Therefore, in the Fig 11 position, the arm assemblies 15 have swung into different angular positions with respect to one another, and are automatically tracking the optimum distance from the respective tubulars TM and T1 in order to maintain the magnetic attractive force with a relatively constant range, keeping the inspection device 1 firmly connected to the structure and keeping the inspection head 35 tracked on the line of the weld W.

As can be seen in Fig 12, the inspection device has crawled into the most acute section of the Y junction between the tubular T1 and TM, and the inspection head 35 (not visible in Fig 12) is even more extended, so that it can track the integrity of the weld W. Fig 12 illustrates effectively that the magnetic arm assemblies 15 on the opposite sides of the rollers 12 are in different angular positions on the starboard and port sides of the inspection device 1, so as to maintain the optimal minimum separation between the magnetic arm assembly 15 on the port side on the tubular TM, and the magnetic am assembly 15 on the starboard side on the tubular TM. Also, Fig 12 shows clearly that in the fore and aft arm assemblies on each side, the arm assemblies 15 are at different rotational configurations with respect to each other. Fig 12 also illustrates how the point of engagement between the spherical rollers 12 and the tubulars can change on the surface of the casing 12a as the inspection device 1 crawls around the weld W. In Fig 12, the tangential point of engagement of the tubular relative to the hemispherical roller casing 12a is relatively close to the central axis of the roller casing 12a in each case, so the points of engagement are spaced relatively far apart on each side of the body. This contrasts with the position in Fig 10, where the points of engagement are relatively close to the outer rim of the roller casings 12a, and relatively close together, but still the inspection head is typically oriented at the mid-line between the two spaced apart points of engagement, which coincides with the weld W. Thus embodiments of the invention are able to stabilise the body and therefore orientate the inspection tool correctly even in the situation where the topography of the surface over which they are moving is not consistent.

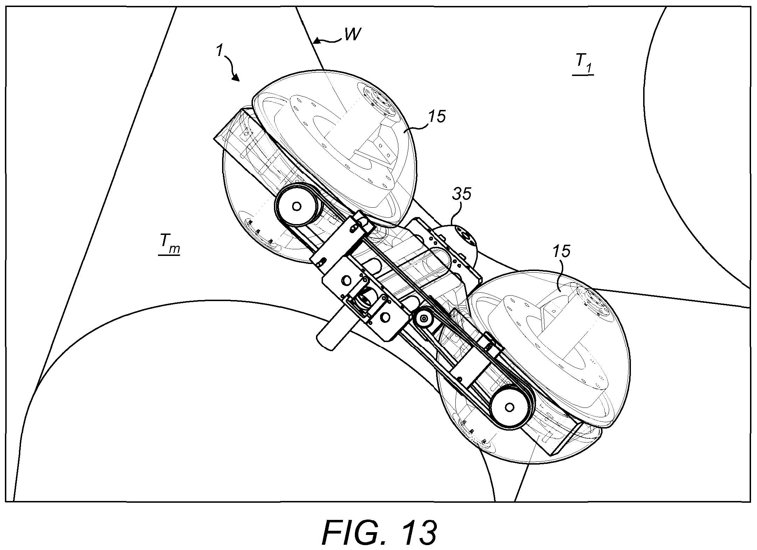

Fig 13 shows a view from the starboard side of the structure, following the sequence from Fig 12, and showing the inspection head 35 tracked onto the weld W, the fore and aft magnetic arm assemblies 15 being located in different angular positions in each of the fore and aft hemispherical roller casings 12a on the starboard side as they swing to the minimum distance between the magnets 20 and the tubular T1.

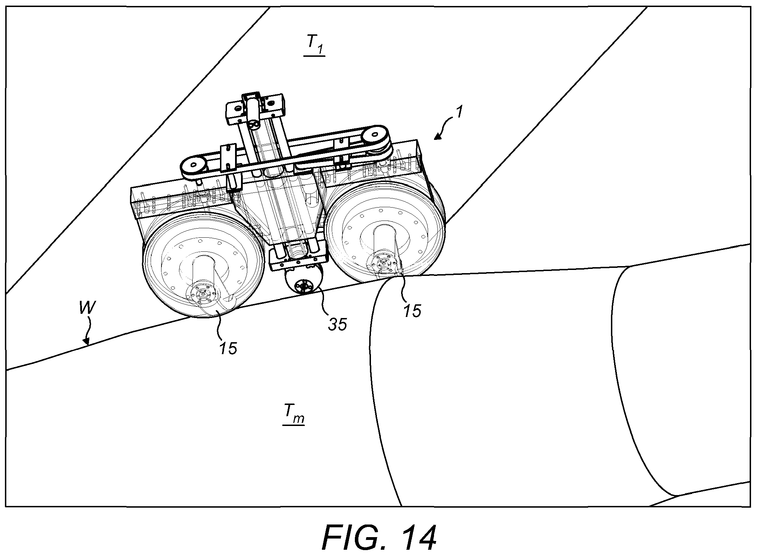

Fig 14 shows the position on the starboard side of the structure as the inspection device 1 has crawled further around the weld W from the position shown in Fig 13, and is approaching another flat section on the starboard side of the main tubular TM similar to the view of the port side shown in Fig 10. In this configuration, the magnetic arm assemblies 15 have swung to different respective positions in order to maintain a relatively constant separation between the magnets 20 on the arms 15 and the main tubular TM on the port side, and the tubular T1 on the starboard side of the inspection device 1. Again, because the angular separation between the tubulars T1 and TM is different at the two positions of the fore and aft roller assemblies, the relative rotational positions of the freely swinging magnetic arm assemblies 15 is also different between the fore and aft roller assemblies.

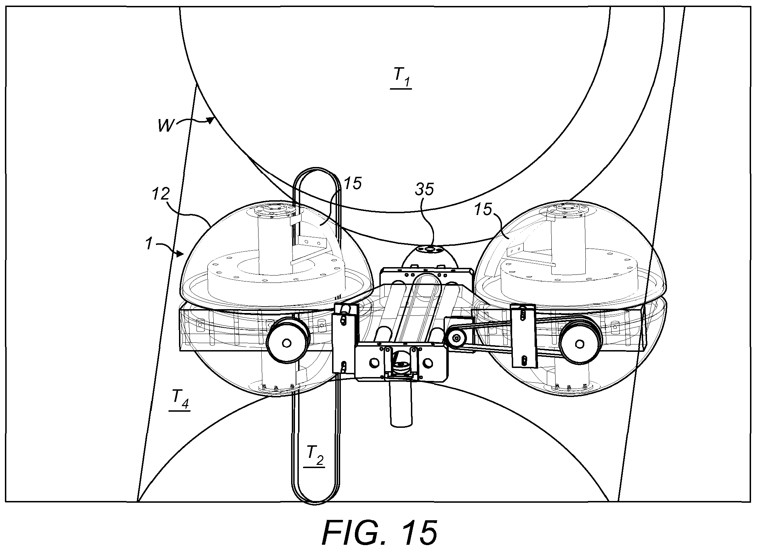

Fig 15 shows a plan view of the structure being inspected showing the inspection device 1 having generally completed its survey of the weld W between the first tubular T1 and the main tubular TM. The inspection head 35 is still tracking the weld W, and again the magnetic arm assemblies 15 on respective sides of the inspection device 1 are swinging to their optimum angular positions in order to maintain a consistent magnetic attractive force between the inspection device 1 and the two tubulars. However, in this case, the magnetic arm assemblies 15 on the port side of the inspection device 1 are attracted to the outer surface of the tubular T2 (typically at a high tangential position on the hemispherical roller close to the axis of rotation) and on the starboard side of the inspection device 1, the magnetic arm assemblies 15 have rotated to the minimum distance available between the magnets 20 and the first tubular T1.

The inspection head can typically comprise a camera and/or an ultrasound device, and/or an X-ray device. Different embodiments of the invention can incorporate different sensors, but all embodiments typically permit the tracking of a weld or other feature of the structure being inspected by automatic means allowing deployment of the inspection device 1 by ROV without diver intervention. This enables inspection of welds on subsea structures at depths that are inaccessible to divers.

Modifications and improvements can be incorporated without departing from the scope of the invention.

The inspection head can typically comprise a camera and/or an ultrasound device, and/or an X-ray device. Different embodiments of the invention can incorporate different sensors, but all embodiments typically permit the tracking of a weld or other feature of the structure being inspected by automatic means allowing deployment of the inspection device 1 by ROV without diver intervention. This enables inspection of welds on subsea structures at depths that are inaccessible to divers.

Modifications and improvements can be incorporated without departing from the scope of the invention.

## Claims

1. An inspection device (1) for inspecting an item, the device having a body (10), an inspection tool mounted on the body for inspecting the item, a traction mechanism comprising at least one roller device (12), rotationally mounted on an axis of rotation, arranged to move one of the body (10) and the item being inspected relative to the other, thereby moving the inspection tool (30) relative to the item being inspected, the inspection device comprising a stabilising mechanism (15) adapted to orient the body relative to the item so that the inspection tool (30) is oriented towards the item being inspected during relative movement of the inspection device (1) and the item, wherein the stabilising mechanism (15) comprises at least one magnetic device (15a) adapted to attract ferrous metals, and wherein the at least one magnetic device (15a) is rotationally mounted on the axis of rotation of the roller device (12), **characterised in that** the at least one magnetic device (15a) is freely rotatable on the axis of rotation of the roller device (12) relative to the roller device (12).

2. An inspection device as claimed in claim 1, wherein the inspection tool (30) is provided on an inspection head (35) on the body (10), and wherein the inspection tool (30) is moveable relative to the body (10).

3. An inspection device as claimed in claim 1 or claim 2, wherein the stabilising mechanism (15) maintains an orientation of the inspection tool (30) relative to the item being inspected during relative movement of the body (10) and the item being inspected.

4. An inspection device as claimed in any one of claims 1-3, wherein the stabilising mechanism (15) controls the relative orientation of the body (10) and the item during relative movement of the body (10) and the item, so that the orientation of the inspection tool (30) relative to a part of the item being inspected remains consistent while the inspection device (1) moves over non-planar surfaces of the item.

5. An inspection device as claimed in any one of claims 1-4, wherein the stabilising mechanism (15) comprises at least two stabilising members, one on each side of the axis of the body (10), and spaced apart laterally from the body (10), and being adapted to apply a force to stabilise the body (10) against the item at two locations on the item that are spaced apart laterally on either side of the body (10).

6. An inspection device as claimed in any one of claims 1-5, wherein the stabilising mechanism (15) engages the item being inspected at spaced apart locations on either side of the body (10), and orients the inspection tool (30) at the mid-line between the spaced apart points of engagement between the inspection device (1) and the item being inspected.

7. An inspection device as claimed in any one of claims 1-6, wherein the traction mechanism comprises at least two roller devices (12), arranged on opposite sides of the body (10), and wherein the roller devices (12) are at least partially spherical, having partially spherical rolling faces (12a) which contact the item.

8. An inspection device as claimed in any preceding claim, wherein the at least one magnetic device (15a) is constrained to move around an inner surface of the roller device and to maintain a consistent distance between the magnetic device (15a) and a surface of the roller device (12).

9. An inspection device as claimed in claim 8, wherein each magnetic device (15a) is arranged in a geodesic arrangement on an arc which matches the radius of curvature of the roller device (12), so that each magnetic device (15a) is equidistant from the outer surface of its respective roller device (12).

10. An inspection device as claimed in claim 9, wherein the magnetic devices (15a) extend over an arc covering 30-60° of the outer surface of the roller device (12).

11. An inspection device as claimed in any one of claims 1-10, wherein the inspection head (35) can move relative to the body (10), by extending away from the body, and/or retracting towards it.

12. An inspection device as claimed in any one of claims 1-11, wherein the inspection head (35) is biased away from the body (10) thereby urging the inspection head (35) toward the item being inspected.

13. An inspection device as claimed in any one of claims 1-12, wherein the inspection head (35) comprises a magnetic device adapted to attract the head to a ferrous metal item being inspected.

14. An inspection device as claimed in any one of claims 1-13, wherein the stabilising mechanism (15) is asymmetric with respect to the axis of rotation of the roller device (12).

15. A method of inspecting an item, the method comprising providing an inspection device (1) having a body (10), an inspection tool (30) mounted on the body for inspecting the item, a traction mechanism arranged to move the body, thereby moving the inspection tool (30) relative to the item being inspected, the traction mechanism comprising at least one roller device (12) rotationally mounted on an axis of rotation, and at least one magnetic device (15a) mounted on the axis of rotation of the roller device (12), the method including the steps of maintaining the inspection tool (30) in a consistent orientation relative to the item being inspected during relative movement of the inspection device (1) and the item, **characterised by** allowing free rotation of the at least one magnetic device (15a) relative to the roller device (12) around the axis of rotation of the roller device (12), as the inspection device (1) moves relative to the item being inspected.

16. A method as claimed in claim 15, wherein the item has a non-planar surface, and wherein the stabilising mechanism (15) controls the relative orientation of the body (10) and the item during relative movement of the body (10) and the item, so that the orientation of the inspection tool (30) relative to a part of the item being inspected remains consistent while the inspection device (1) moves over the non-planar surface of the item.

17. A method as claimed in claim 15 or 16, wherein the item comprises a weld (W) between two tubular members (T1, T2) each comprising a ferrous metal component.

18. A method as claimed in any one of claims 15-17, wherein the item is a submerged item, and wherein the method is carried out underwater, and wherein the inspection device (1) has neutral buoyancy.

19. A method as claimed in any one of claims 15-18 wherein the inspection tool (30) is provided on an inspection head (35) on the body (10), and including the step of moving the inspection tool (30) moveable relative to the body (10).

20. A method as claimed in any one of claims 15-19, including biasing the inspection head (35) away from the body (10) thereby urging the inspection head (35) toward the item being inspected.

21. A method as claimed in any one of claims 15-20, including maintaining a consistent spatial relationship between the inspection head (35) and the item being inspected as the body (10) moves in relation to the item being inspected.

## Patentansprüche

1. Prüfvorrichtung (1) zur Prüfung eines Gegenstandes, wobei die Vorrichtung einen Körper (10), ein an dem Körper angebrachtes Prüfwerkzeug zur Inspektion des Gegenstandes, einen Zugmechanismus mit wenigstens einer Rollenvorrichtung (12), die drehbar auf einer Drehachse gelagert ist, die angeordnet ist, um den Körper (10) und den zu prüfenden Gegenstand relativ zu dem anderen zu bewegen, wodurch das Prüfwerkzeug (30) relativ zu dem zu prüfenden Gegenstand bewegt wird, wobei die Prüfvorrichtung einen Stabilisierungsmechanismus (15) umfasst, der dazu angepasst ist, den Körper relativ zu dem Gegenstand auszurichten, so dass das Prüfwerkzeug (30) während der Relativbewegung der Prüfvorrichtung (1) und des Gegenstands zu dem zu prüfenden Gegenstand ausgerichtet ist, wobei der Stabilisierungsmechanismus (15) wenigstens eine Magnetvorrichtung (15a) umfasst, die dazu angepasst ist, Eisenmetalle anzuziehen, und wobei die wenigstens eine Magnetvorrichtung (15a) drehbar auf der Drehachse der Rollenvorrichtung (12) montiert ist, **dadurch gekennzeichnet, dass** die wenigstens eine Magnetvorrichtung (15a) um die Drehachse der Rollenvorrichtung (12) relativ zur Rollenvorrichtung (12) frei drehbar ist.

2. Prüfvorrichtung nach Anspruch 1, wobei das Prüfwerkzeug (30) an einem Prüfkopf (35) an dem Körper (10) vorgesehen ist und wobei das Prüfwerkzeug (30) relativ zu dem Körper (10) beweglich ist.

3. Prüfvorrichtung nach Anspruch 1 oder 2, wobei der Stabilisierungsmechanismus (15) eine Ausrichtung des Prüfwerkzeugs (30) relativ zu dem zu prüfenden Gegenstand während der Relativbewegung des Körpers (10) und des zu prüfenden Gegenstands beibehält.

4. Prüfvorrichtung nach einem der Ansprüche 1 bis 3, wobei der Stabilisierungsmechanismus (15) die relative Ausrichtung des Körpers (10) und des Gegenstands während der relativen Bewegung des Körpers (10) und des Gegenstands so steuert, dass die Ausrichtung des Prüfwerkzeugs (30) relativ zu einem Teil des zu prüfenden Gegenstands gleich bleibt, während sich die Prüfvorrichtung (1) über nicht ebene Oberflächen des Gegenstands bewegt.

5. Prüfvorrichtung nach einem der Ansprüche 1 bis 4, wobei der Stabilisierungsmechanismus (15) wenigstens zwei Stabilisierungselemente umfasst, eines auf jeder Seite der Achse des Körpers (10) und seitlich vom Körper (10) beabstandet und dazu angepasst, eine Kraft zum Stabilisieren des Körpers (10) gegen den Gegenstand an zwei Stellen auf den Gegenstand aufzubringen, die seitlich auf beiden Seiten des Körpers (10) beabstandet sind.

6. Prüfvorrichtung nach einem der Ansprüche 1 bis 5, wobei der Stabilisierungsmechanismus (15) an beabstandeten Stellen auf beiden Seiten des Körpers (10) mit dem zu prüfenden Gegenstand in Eingriff steht und das Prüfwerkzeug (30) an die Mittellinie zwischen den voneinander beabstandeten Eingriffspunkten zwischen der Prüfvorrichtung (1) und dem zu prüfenden Gegenstand ausrichtet.

7. Prüfvorrichtung nach einem der Ansprüche 1-6, wobei der Zugmechanismus wenigstens zwei Rollenvorrichtungen (12) umfasst, die an gegenüberliegenden Seiten des Körpers (10) angeordnet sind, und wobei die Rollenvorrichtungen (12) wenigstens teilweise kugelförmig sind und teilweise kugelförmige Rollflächen (12a) aufweisen, die den Gegenstand berühren.

8. Prüfvorrichtung nach einem der vorhergehenden Ansprüche, wobei die wenigstens eine Magnetvorrichtung (15a) gezwungen ist, sich um eine Innenfläche der Rollenvorrichtung zu bewegen und einen gleichbleibenden Abstand zwischen der Magnetvorrichtung (15a) und einer Oberfläche von der Rollenvorrichtung (12) aufrechtzuerhalten.

9. Prüfvorrichtung nach Anspruch 8, wobei jede Magnetvorrichtung (15a) in einer geodätischen Anordnung auf einem Bogen angeordnet ist, der dem Krümmungsradius der Rollenvorrichtung (12) entspricht, so dass jede Magnetvorrichtung (15a) äquidistant von der Außenfläche ihrer jeweiligen Rollenvorrichtung (12) ist.

10. Prüfvorrichtung nach Anspruch 9, wobei sich die Magnetvorrichtungen (15a) über einen Bogen erstrecken, der 30-60° der Außenfläche der Rollenvorrichtung (12) bedeckt.

11. Prüfvorrichtung nach einem der Ansprüche 1 bis 10, wobei sich der Prüfkopf (35) relativ zu dem Körper (10) bewegen kann, indem er sich von dem Körper weg erstreckt und/oder sich zu ihm zurückzieht.

12. Prüfvorrichtung nach einem der Ansprüche 1 bis 11, wobei der Prüfkopf (35) von dem Körper (10) weg vorgespannt ist, wodurch der Prüfkopf (35) zum prüfenden Gegenstand gedrückt wird.

13. Prüfvorrichtung nach einem der Ansprüche 1 bis 12, wobei der Prüfkopf (35) eine Magnetvorrichtung umfasst, die dazu angepasst ist, den Kopf an einen zu prüfenden Eisenmetallgegenstand anzuziehen.

14. Prüfvorrichtung nach einem der Ansprüche 1 bis 13, wobei der Stabilisierungsmechanismus (15) in Bezug auf die Drehachse der Rollenvorrichtung (12) asymmetrisch ist.

15. Verfahren zum Prüfen eines Gegenstands, wobei das Verfahren das Bereitstellen einer Prüfvorrichtung (1) mit einem Körper (10), einem an dem Körper montierten Prüfwerkzeug (30) zum Prüfen des Gegenstands und einem Zugmechanismus, der angeordnet ist, um den Körper zu bewegen, umfasst, wodurch das Prüfwerkzeug (30) relativ zu dem zu prüfenden Gegenstand bewegt wird, wobei der Zugmechanismus wenigstens eine auf einer Drehachse drehbar montierte Rollenvorrichtung (12) und wenigstens eine auf der Drehachse der Rollenvorrichtung (12) montierte Magnetvorrichtung (15a) umfasst, wobei das Verfahren die Schritte des Aufrechterhaltens des Prüfwerkzeugs (30) während der Relativbewegung der Prüfvorrichtung (1) und des Gegenstands in einer gleichbleibenden Ausrichtung umfasst, **gekennzeichnet durch** Ermöglichen einer freien Drehung von der wenigstens einen Magnetvorrichtung (15a) relativ zur Rollenvorrichtung (12) um die Drehachse der Rollenvorrichtung (12), wenn sich die Prüfvorrichtung (1) relativ zum zu prüfenden Gegenstand bewegt.

16. Verfahren nach Anspruch 15, wobei der Gegenstand eine nicht ebene Oberfläche aufweist und wobei der Stabilisierungsmechanismus (15) die relative Ausrichtung des Körpers (10) und des Gegenstands während der relativen Bewegung des Körpers (10) und des Gegenstands so steuert, dass die Ausrichtung des Prüfwerkzeugs (30) relativ zu einem Teil des zu prüfenden Gegenstands gleich bleibt, während sich die Prüfvorrichtung (1) über nicht ebene Oberflächen des Gegenstands bewegt.

17. Verfahren nach Anspruch 15 oder 16, wobei der Gegenstand eine Schweißnaht (W) zwischen zwei rohrförmigen Elementen (T1, T2) umfasst, die jeweils eine Eisenmetallkomponente umfassen.

18. Verfahren nach einem der Ansprüche 15 bis 17, wobei der Gegenstand ein untergetauchter Gegenstand ist und wobei das Verfahren unter Wasser ausgeführt wird und wobei die Prüfvorrichtung (1) einen neutralen Auftrieb aufweist.

19. Verfahren nach einem der Ansprüche 15 bis 18, wobei das Prüfwerkzeug (30) an einem Prüfkopf (35) am Körper (10) vorgesehen ist und den Schritt des Bewegens des Prüfwerkzeugs (30) umfasst, der relativ zu dem Körper (10) beweglich ist.

20. Verfahren nach einem der Ansprüche 15 bis 19, wobei der Prüfkopf (35) von dem Körper (10) weg vorgespannt wird, wodurch der Prüfkopf (35) in Richtung des zu prüfenden Gegenstands gedrückt wird.

21. Verfahren nach einem der Ansprüche 15 bis 20, umfassend das Aufrechterhalten einer gleichbleibenden räumlichen Beziehung zwischen dem Prüfkopf (35) und dem zu prüfenden Gegenstand, wenn sich der Körper (10) in Bezug auf den zu prüfenden Gegenstand bewegt.

## Revendications

1. Dispositif d'inspection (1) pour inspecter un article, le dispositif ayant un corps (10), un outil d'inspection monté sur le corps pour inspecter l'article, un mécanisme de traction comprenant au moins un dispositif à rouleau (12) monté, en rotation, sur un axe de rotation, agencé pour déplacer l'un parmi le corps (10) et l'article qui est inspecté l'un par rapport à l'autre, déplaçant ainsi l'outil d'inspection (30) par rapport à l'article qui est inspecté, le dispositif d'inspection comprenant un mécanisme de stabilisation (15) adapté pour orienter le corps par rapport à l'article de sorte que l'outil d'inspection (30) est orienté vers l'article qui est inspecté pendant le mouvement relatif du dispositif d'inspection (1) et de l'article, dans lequel le mécanisme de stabilisation (15) comprend au moins un dispositif magnétique (15a) adapté pour attirer les métaux ferreux, et dans lequel le au moins un dispositif magnétique (15a) est monté en rotation sur l'axe de rotation du dispositif à rouleau (12), **caractérisé en ce que** le au moins un dispositif magnétique (15a) peut librement tourner sur l'axe de rotation du dispositif à rouleau (12) par rapport au dispositif à rouleau (12).

2. Dispositif d'inspection selon la revendication 1, dans lequel l'outil d'inspection (30) est prévu sur une tête d'inspection (35) sur le corps (10), dans lequel l'outil d'inspection (30) est mobile par rapport au corps (10).

3. Dispositif d'inspection selon la revendication 1 ou la revendication 2, dans lequel le mécanisme de stabilisation (15) maintient une orientation de l'outil d'inspection (30) par rapport à l'article qui est inspecté pendant le mouvement relatif du corps (10) et de l'article qui est inspecté.

4. Dispositif d'inspection selon l'une quelconque des revendications 1 à 3, dans lequel le mécanisme de stabilisation (15) commande l'orientation relative du corps (10) et de l'article pendant le mouvement relatif du corps (10) et de l'article, de sorte que l'orientation de l'outil d'inspection (30) par rapport à une partie de l'article qui est inspecté, reste cohérente alors que le dispositif d'inspection (1) se déplace sur des surfaces non planaires de l'article.

5. Dispositif d'inspection selon l'une quelconque des revendications 1 à 4, dans lequel le mécanisme de stabilisation (15) comprend au moins deux éléments de stabilisation, un de chaque côté de l'axe du corps (10) et latéralement espacés du corps (10) et étant adaptés pour appliquer une force afin de stabiliser le corps (10) contre l'article au niveau de deux emplacements sur l'article qui sont latéralement espacés de chaque côté du corps (10).

6. Dispositif d'inspection selon l'une quelconque des revendications 1 à 5, dans lequel le mécanisme de stabilisation (15) met en prise l'article qui est inspecté à des emplacements espacés de chaque côté du corps (10) et oriente l'outil d'inspection (30) au niveau de la ligne centrale entre les points espacés de mise en prise entre le dispositif d'inspection (1) et l'article qui est inspecté.

7. Dispositif d'inspection selon l'une quelconque des revendications 1 à 6, dans lequel le mécanisme de traction comprend au moins deux dispositifs à rouleau (12) agencés sur les côtés opposés du corps (10) et dans lequel les dispositifs à rouleau (12) sont au moins partiellement sphériques, ayant des faces de roulement (12a) partiellement sphériques qui sont en contact avec l'article.

8. Dispositif d'inspection selon l'une quelconque des revendications précédentes, dans lequel on empêche le au moins un dispositif magnétique (15a) de se déplacer autour d'une surface interne du dispositif à rouleau et de maintenir une distance cohérente entre le dispositif magnétique (15a) et une surface du dispositif à rouleau (12).

9. Dispositif d'inspection selon la revendication 8, dans lequel chaque dispositif magnétique (15a) est agencé selon un agencement géodésique sur un arc qui correspond au rayon de courbure du dispositif à rouleau (12), de sorte que chaque dispositif magnétique (15a) est à équidistance de la surface externe de son dispositif à rouleau (12) respectif.

10. Dispositif d'inspection selon la revendication 9, dans lequel les dispositifs magnétiques (15a) s'étendent sur un arc couvrant 30 à 60° de la surface externe du dispositif à rouleau (12).

11. Dispositif d'inspection selon l'une quelconque des revendications 1 à 10, dans lequel la tête d'inspection (35) peut se déplacer par rapport au corps (10) en s'étendant à distance du corps et/ou en ce rétractant vers ce dernier.

12. Dispositif d'inspection selon l'une quelconque des revendications 1 à 11, dans lequel la tête d'inspection (35) est sollicitée à distance du corps (10), poussant ainsi la tête d'inspection (35) vers l'article qui est inspecté.

13. Dispositif d'inspection selon l'une quelconque des revendications 1 à 12, dans lequel la tête d'inspection (35) comprend un dispositif magnétique adapté pour attirer la tête vers un article en métal ferreux qui est inspecté.

14. Dispositif d'inspection selon l'une quelconque des revendications 1 à 13, dans lequel le mécanisme de stabilisation (15) est asymétrique par rapport à l'axe de rotation du dispositif à rouleau (12).

15. Procédé pour inspecter un article, le procédé comprenant l'étape pour fournir un dispositif d'inspection (1) ayant un corps (10), un outil d'inspection (30) monté sur le corps pour inspecter l'article, un mécanisme de traction agencé pour déplacer le corps, déplaçant ainsi l'outil d'inspection (30) par rapport à l'article qui est inspecté, le mécanisme de traction comprenant au moins un dispositif à rouleau (12) monté en rotation sur un axe de rotation, et au moins un dispositif magnétique (15a) monté sur l'axe de rotation du dispositif à rouleau (12), le procédé comprenant les étapes pour maintenir l'outil d'inspection (30) dans une orientation cohérente par rapport à l'article qui est inspecté pendant le déplacement relatif du dispositif d'inspection (1) et de l'article, **caractérisé par** l'étape permettant la libre rotation du au moins un dispositif magnétique (15a) par rapport au dispositif à rouleau (12) autour de l'axe de rotation du dispositif à rouleau (12), lorsque le dispositif d'inspection (1) se déplace par rapport à l'article qui est inspecté.

16. Procédé selon la revendication 15, dans lequel l'article a une surface non planaire, et dans lequel le mécanisme de stabilisation (15) commande l'orientation relative du corps (10) et de l'article pendant le déplacement relatif du corps (10) et de l'article, de sorte que l'orientation de l'outil d'inspection (30) par rapport à une partie de l'article qui est inspecté reste cohérente alors que le dispositif d'inspection (1) se déplace sur la surface non planaire de l'article.

17. Procédé selon la revendication 15 ou 16, dans lequel l'article comprend une soudure (W) entre deux éléments tubulaires (T1, T2) comprenant chacun un composant de métal ferreux.

18. Procédé selon l'une quelconque des revendications 15 à 17, dans lequel l'article est un article immergé, et dans lequel le procédé est réalisé sous l'eau, et dans lequel le dispositif d'inspection (1) a une flottabilité neutre.

19. Procédé selon l'une quelconque des revendications 15 à 18, dans lequel l'outil d'inspection (30) est prévu sur une tête d'inspection (35) sur le corps (10) et comprend l'étape pour déplacer l'outil d'inspection (30) mobile par rapport au corps (10).

20. Procédé selon l'une quelconque des revendications 15 à 19, comprenant l'étape pour solliciter la tête d'inspection (35) à distance du corps (10), poussant ainsi la tête d'inspection (35) vers l'article qui est inspecté.

21. Procédé selon l'une quelconque des revendications 15 à 20, comprenant l'étape pour maintenir une relation spatiale cohérente entre la tête d'inspection (35) et l'article qui est inspecté, lorsque le corps (10) se déplace par rapport à l'article qui est inspecté.
